(19) Europäisches Patentamt
European Patent Office
Office européen des brevets

(11) **EP 4 022 760 B1**

(12) **EUROPÄISCHE PATENTSCHRIFT**

(45) Veröffentlichungstag und Bekanntmachung des Hinweises auf die Patenterteilung:
**02.08.2023 Patentblatt 2023/31**

(21) Anmeldenummer: **20754716.7**

(22) Anmeldetag: **10.08.2020**

(51) Internationale Patentklassifikation (IPC):
*H02M 3/335* $^{(2006.01)}$    *G05F 1/56* $^{(2006.01)}$
*G05F 1/62* $^{(2006.01)}$

(52) Gemeinsame Patentklassifikation (CPC):
**H02M 1/32; H02M 3/33507;** H02M 1/0022;
H02M 1/0025; H02M 1/0029; H02M 3/285

(86) Internationale Anmeldenummer:
**PCT/EP2020/072380**

(87) Internationale Veröffentlichungsnummer:
**WO 2021/037542 (04.03.2021 Gazette 2021/09)**

(54) **GLEICHSPANNUNGSWANDLER UND VERFAHREN ZUM BETRIEB EINES GLEICHSPANNUNGSWANDLERS**

DC-DC CONVERTER AND METHOD FOR OPERATING A DC-DC CONVERTER

CONVERTISSEUR CC-CC ET PROCÉDÉ DE FONCTIONNEMENT D'UN CONVERTISSEUR CC-CC

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.08.2019 DE 102019213068**

(43) Veröffentlichungstag der Anmeldung:
**06.07.2022 Patentblatt 2022/27**

(73) Patentinhaber: **Robert Bosch GmbH 70442 Stuttgart (DE)**

(72) Erfinder:
• **ESTEGHLAL, Gholamabas 70499 Stuttgart -Weilimdorf (DE)**
• **KIENZLER, Christoph 70839 Gerlingen (DE)**

(56) Entgegenhaltungen:
**WO-A1-2017/162408    US-B1- 6 429 709**

**Beschreibung**

Die vorliegende Erfindung betrifft einen Gleichspannungswandler und ein Verfahren zum Betrieb eines Gleichspannungswandlers.

Stand der Technik

Die Druckschrift DE 10 2016 219 740 A1 offenbart einen Gleichspannungskonverter mit mehreren parallel geschalteten Gleichspannungswandler-Modulen. Hierbei ist für alle Gleichspannungswandler-Module ein gemeinsamer Spannungsregler vorgesehen. Darüber hinaus ist für jedes Gleichspannungswandler-Modul eine separate Stromregelung vorgesehen.

Gleichspannungswandler sind dazu vorgesehen, eine Eingangsgleichspannung in eine Ausgangsgleichspannung zu konvertieren, wobei die Spannungshöhe der Eingangsgleichspannung von der Spannungshöhe der Ausgangsgleichspannung verschieden sein kann. Mittels einer Regelung kann die Ausgangsspannung sowie ein Ausgangsstrom des Gleichspannungswandlers gemäß einen vorgegebenen Sollwert eingestellt werden. Auch die Druckschrift WO 2017/162408 A1 offenbart einen Gleichspannungswandler.

Offenbarung der Erfindung

Die vorliegende Erfindung offenbart einen Gleichspannungswandler sowie ein Verfahren zum Betrieb eines Gleichspannungswandlers mit den Merkmalen der unabhängigen Patentansprüche. Weitere vorteilhafte Ausführungsformen sind Gegenstand der abhängigen Patentansprüche.

Demgemäß ist vorgesehen:

Ein Gleichspannungswandler mit einer ersten Regeleinrichtung, einer zweiten Regeleinrichtung, einem Kombinationsglied, einer dritten Regeleinrichtung und mindestens einem Gleichspannungswandler-Modul. Die erste Regeleinrichtung ist dazu ausgelegt, eine erste Regelgröße zu bestimmen. Die erste Regelgröße kann insbesondere unter Verwendung eines Wertes einer aktuellen Eingangsspannung, eines Wertes für den aktuellen Eingangsstrom und einem Sollwert für eine Ausgangsspannung bestimmt werden. Die zweite Regeleinrichtung ist dazu ausgelegt, eine zweite Regelgröße zu bestimmen. Die zweite Regelgröße kann insbesondere unter Verwendung des Sollwerts für die Ausgangsspannung und dem Wert für die aktuelle Ausgangsspannung bestimmt werden. Das Kombinationsglied ist dazu ausgelegt, die erste Regelgröße und die zweite Regelgröße zu kombinieren. Die Kombination der ersten und zweiten Regelgröße kann als Soll-Regelgröße ausgegeben werden. Die dritte Regeleinrichtung ist dazu ausgelegt, einen Gradienten der Sollgröße, das heißt der Kombination der ersten und zweiten Regelgröße, auf einen vorbestimmten Minimalwert und/oder Maximalwert zu begrenzen. Die durch die dritte Regeleinrichtung begrenzte Soll-Regelgröße kann als Ausgabe-Regelgröße bereitgestellt werden. Das mindestens eine Gleichspannungswandler-Modul ist dazu ausgelegt, unter Verwendung der Ausgabe-Regelgröße eine Eingangsgleichspannung in eine Ausgangsgleichspannung zu konvertieren.

Weiterhin ist vorgesehen:

Ein Verfahren zum Betrieb eines Gleichspannungswandlers. Das Verfahren umfasst einen Schritt zum Bestimmen einer ersten Regelgröße unter Verwendung eines Werts einer aktuellen Eingangsspannung, eines Werts eines aktuellen Eingangsstroms und einem Sollwert für eine Ausgangsspannung. Weiterhin umfasst das Verfahren einen Schritt zum Bestimmen einer zweiten Regelgröße unter Verwendung des Sollwerts für die Ausgangsspannung und dem Wert für die aktuelle Ausgangsspannung. Das Verfahren umfasst darüber hinaus einen Schritt zum Kombinieren der ersten Regelgröße und der zweiten Regelgröße zu einer Soll-Regelgröße und einen Schritt zum Begrenzen eines Gradienten der Soll-Regelgröße. Insbesondere kann die Soll-Regelgröße auf einen vorbestimmten Minimalwert und/oder einen vorbestimmten Maximalwert begrenzt werden. Die so begrenzte Soll-Regelgröße kann als Ausgabe-Regelgröße bereitgestellt werden. Schließlich kann das Verfahren einen Schritt zum Ansteuern mindestens eines Gleichspannungswandler-Moduls umfassen, wobei das Gleichspannungswandler-Modul unter Verwendung der Ausgabe-Regelgröße angesteuert werden kann.

Vorteile der Erfindung

Der vorliegenden Erfindung liegt die Erkenntnis zugrunde, dass ein elektrischer Strom in einem Gleichspannungswandler insbesondere im Hochsetzbetrieb (Englisch: Boost-Betrieb) je nach Regelverhalten gegebenenfalls sehr steil ansteigen oder abfallen kann. Eine derartige sehr schnelle Veränderung des Anstiegs oder Abfalls des elektrischen Stroms in dem Gleichspannungswandler kann gegebenenfalls die elektrischen Bauteile in dem Gleichspannungswandler sehr stark beanspruchen. Mitunter kann dies bis hin zu einer Zerstörung von Bauteilen in dem Gleichspannungswandler führen.

Es ist daher eine Idee der vorliegenden Erfindung, dieser Erkenntnis Rechnung zu tragen und eine Regelung für einen Gleichspannungswandler vorzusehen, welche einen Betriebszustand mit übermäßig starkem Anstieg oder Abfall des elektrischen Stroms in dem Gleichspannungswandler verhindern kann. Hierzu ist es vorgesehen, den Gradienten einer Regelgröße zur Ansteuerung des Gleichspannungswandlers zu begrenzen. Beispielsweise kann es sich bei der Regelgröße hierbei um ein Tastverhältnis für die Ansteuerung der Schaltelemente in dem Gleichspannungswandler handeln. Durch die Begrenzung des Gradienten in der Regelgröße kann somit auch der maximale Anstieg bzw. Abfall des elektrischen Stroms in dem Gleichspannungswandler limitiert werden. Darüber hinaus ist es unter Einhaltung der vorgegebenen Grenzen für den Anstieg bzw. den Abfall des elektrischen Stroms möglich, eine gewünschte Soll-Spannung oder einen gewünschten Soll-Strom möglichst schnell einzustellen, ohne hierbei die Grenzen für eine Überbeanspruchung der Bauteile in dem Gleichspannungswandler zu überschreiten.

Gemäß einer Ausführungsform ist die dritte Regeleinrichtung dazu ausgelegt, den Gradienten der Soll-Regelgröße unter Verwendung des Werts für die aktuelle Eingangsspannung und dem Wert für die aktuelle Ausgangsspannung zu begrenzen. Die dritte Regeleinrichtung kann beispielsweise aus den Werten für die aktuelle Eingangsspannung und die aktuelle Ausgangsspannung des aktuellen Betriebszustands und insbesondere die aktuell eingestellte Regelgröße in dem Gleichspannungswandler-Modul ermitteln. Entsprechend kann aus dem Vergleich zwischen der aktuellen Regelgröße und der vorgegebenen Soll-Regelgröße ein Gradient der neu einzustellenden Regelgröße ermittelt werden. Überschreitet dieser Gradient ein vorgegebenes Limit, so kann die dritte Regeleinrichtung die neu einzustellende Regelgröße auf eine Regelgröße gemäß dem vorgegebenen Limit beschränken.

Gemäß einer Ausführungsform umfasst das mindestens eine Gleichspannungswandler-Modul einen Transformator. Der Transformator kann insbesondere zwischen dem Eingangsanschluss und dem Ausgangsanschluss des Gleichspannungswandler-Moduls vorgesehen sein. In diesem Fall kann die dritte Regeleinrichtung dazu ausgelegt sein, den Gradienten der Soll-Regelgröße unter Verwendung des Übersetzungsverhältnisses des Transformators zu begrenzen. Das Übersetzungsverhältnis kann insbesondere das Verhältnis der Windungen zwischen einer Primärspule und einer Sekundärspule des Transformators bezeichnen. Dieses Übersetzungsverhältnis kann neben der aktuellen Eingangsspannung und der aktuellen Ausgangsspannung mit für die Bestimmung der aktuellen Einstellungen des Gleichspannungswandlers herangezogen werden.

Gemäß einer Ausführungsform ist die dritte Regeleinrichtung dazu ausgelegt, eine maximale Stromänderung in dem Gleichspannungswandler zu begrenzen. Die maximale Stromänderung kann sich dabei beispielsweise auf den Eingangsstrom oder den Ausgangsstrom des Gleichspannungswandlers beziehen. Durch die Limitierung der Stromänderung und somit eine Begrenzung des Stromgradienten in dem Gleichspannungswandler kann gewährleistet werden, dass eine Überbeanspruchung der Bauteile in dem Gleichspannungswandler vermieden werden kann.

Gemäß einer Ausführungsform wird das mindestens eine Gleichspannungswandler-Modul des Gleichspannungswandlers in einem Hochsetzstellerbetrieb (Boost-Betrieb) betrieben. Insbesondere im Hochsetzstellerbetrieb können ab einer bestimmten Regelgröße, insbesondere ab einem bestimmten Tastverhältnis, bei starken Änderungen des elektrischen Stroms Überbeanspruchungen der Bauteile auftreten, die bis hin zu einer Beschädigung der Bauteile führen können. Durch eine Begrenzung der Regelgröße und somit der Änderung des elektrischen Stroms können derartige gefährliche Betriebszustände verhindert werden.

Die obigen Ausgestaltungen und Weiterbildungen lassen sich, soweit sinnvoll, beliebig miteinander kombinieren. Weitere Ausgestaltungen, Weiterbildungen und Implementierungen der Erfindung umfassen auch nicht explizit genannte Kombinationen von zuvor oder im Folgenden bezüglich den Ausführungsbeispielen beschriebenen Merkmalen der Erfindung. Insbesondere wird der Fachmann dabei auch Einzelaspekte als Verbesserungen oder Ergänzungen zu den jeweiligen Grundformen der Erfindung hinzufügen.

Kurze Beschreibung der Zeichnungen

Weitere Merkmale und Vorteile der Erfindung werden nachfolgend anhand der Figuren erläutert. Dabei zeigen:

Figur 1: eine schematische Darstellung eines Blockschaltbilds eines Gleichspannungswandlers gemäß einer Ausführungsform;

Figur 2: eine schematische Darstellung eines Blockschaltbilds, wie es einer Regeleinrichtung eines Gleichspannungswandlers gemäß einer Ausführungsform zugrunde liegt; und

Figur 3: eine schematische Darstellung eines Ablaufdiagramms, wie es einem Verfahren zum Betrieb eines Gleichspannungswandlers gemäß einer Ausführungsform zugrunde liegt.

Ausführungsformen der Erfindung

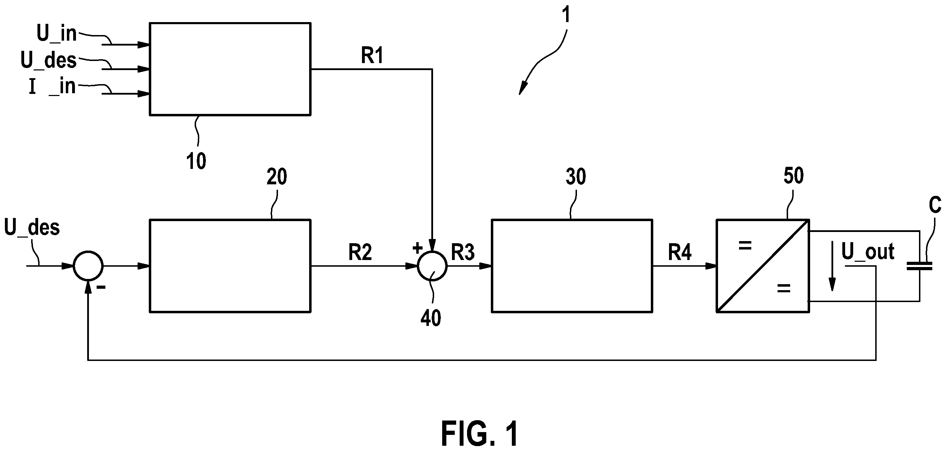

Figur 1 zeigt eine schematische Darstellung eines Prinzipschaltbilds, wie es einem Gleichspannungswandler 1 gemäß einer Ausführungsform zugrunde liegt. Der Gleichspannungswandler 1 kann eines oder mehrere Gleichspannungswandler-Module 50 umfassen, die eine Eingangsgleichspannung U_in in eine Ausgangsspannung U_out konvertieren. Obwohl in Figur 1 lediglich ein einzelnes Gleichspannungswandler-Modul 50 dargestellt ist, ist es prinzipiell auch möglich, mehrere Gleichspannungswandler-Module 50 parallel zu betreiben. Die Ausgangsspannung U_out und/oder ein Ausgangsstrom kann hierbei mittels einer entsprechenden Regelung eingestellt werden. Am Ausgang des Gleichspannungswandlers 1 kann eine Last, beispielsweise ein Kondensator C angeschlossen sein.

Für die Regelung des Gleichspannungswandlers 1, insbesondere des Gleichspannungswandler-Moduls 50 kann beispielsweise eine erste Regeleinrichtung 10 vorgesehen sein. Diese erste Regeleinrichtung 10 kann beispielsweise im Rahmen einer Vorsteuerung eine erste Regelgröße R1 bestimmen. Diese erste Regelgröße R1 kann zum Beispiel auf Grundlage der Eingangsspannung U_in und eines gewünschten Soll-Wertes U_des für die Ausgangsspannung des Gleichspannungswandlers bestimmt werden. Darüber hinaus kann auch der elektrische Strom in dem Gleichspannungswandler, insbesondere der elektrische Strom I_in am Eingang des Gleichspannungswandler-Moduls 50 für die Bestimmung der ersten Regelgröße R1 berücksichtigt werden. Weiterhin kann gegebenenfalls auch ein Übersetzungsverhältnis N eines Transformators in dem Gleichspannungswandler-Modul 50 für die Bestimmung der ersten Regelgröße R1 berücksichtigt werden.

Darüber hinaus kann mittels einer zweiten Regeleinrichtung 20 im Rahmen einer Spannungsregelung eine zweite Regelgröße R2 bestimmt werden. Die zweite Regelgröße R2 kann insbesondere unter Berücksichtigung des Soll-Werts U_des für die Ausgangsspannung des Gleichspannungswandlers 1 sowie dem tatsächlichen aktuellen Wert U_out am Ausgang des Gleichspannungswandlers 1 bestimmt werden.

Die erste Regelgröße R1 von der ersten Regeleinrichtung 10 und die zweite Regelgröße R2 von der zweiten Regeleinrichtung 20 können in einer Kombinationseinrichtung 40 zusammengefasst, beispielsweise aufsummiert werden. Die Kombination der ersten Regelgröße R1 und der zweiten Regelgröße R2 kann als Soll-Regelgröße R3 von der Kombinationseinrichtung 40 ausgegeben werden. Diese Soll-Regelgröße R3 stellt somit eine Regelgröße dar, welche unter Berücksichtigung der aktuellen Ausgangsspannung U_out und der weiteren Rahmenbedingungen, wie beispielsweise Eingangsspannung U_in, Eingangsstrom I_in etc. eingestellt werden sollte, um die gewünschte Ausgangsspannung U_des zu erzielen. Bei der Regelgröße kann es sich beispielsweise um die Vorgabe eines Tastverhältnisses für die Ansteuerung der Schaltelemente in dem Gleichspannungswandler-Modul 50 handeln.

Unter bestimmten Betriebsbedingungen, insbesondere ab einem bestimmten Tastverhältnis, kann eine zu starke Änderung der Regelgröße, insbesondere eine starke Änderung des Tastverhältnisses, zu einer starken Änderung des elektrischen Stroms und somit einem hohen Stromgradienten führen. Um eine Beschädigung der Bauelemente in dem Gleichspannungswandler 1, insbesondere dem Gleichspannungswandler-Modul 50, zu vermeiden, kann der Gradient der Regelgröße R3 und damit einhergehend der Stromgradient, also die Änderung des elektrischen Stroms in dem Gleichspannungswandler 1 mittels der dritten Regeleinrichtung 30 begrenzt werden. Überschreitet der Gradient der Regelgröße R3 von der Kombinationseinrichtung 40 einen vorgegebenen Maximalwert, oder unterschreitet der (negative) Gradient der Regelgröße R3 einen Minimalwert, so kann die von der Kombinationseinrichtung 40 ausgegebene Regelgröße R3 begrenzt werden. Auf diese Weise kann die dritte Regeleinrichtung 3 eine Ausgabe-Regelgröße R4 bereitstellen, deren Gradienten sich innerhalb eines vorgegebenen Fensters zwischen einem (positiven) Maximalwert und einem (negativen) Minimalwert bewegt. Diese begrenzte Regelgröße R4 kann daraufhin dem Gleichspannungswandler-Modul 50 bereitgestellt werden.

Die dritte Regeleinrichtung 30 kann beispielsweise einen aktuellen Arbeitspunkt R_cur aus der aktuellen Eingangsspannung U_in, dem Übersetzungsverhältnis N des Transformators in dem Gleichspannungswandler-Modul 50 sowie der aktuellen Ausgangsspannung U_out wie folgt berechnen:

$$R\_cur = 1 - (U\_in \times N/(2 \times U\_out))$$

Ist die Soll-Regelgröße R3 deutlich größer als der aktuelle Arbeitspunkt R_cur, so kann dies zu einem zu hohen elektrischen Strom in dem Gleichspannungswandler führen. Ist dagegen die Soll-Regelgröße R3 deutlich kleiner als der aktuelle Arbeitspunkt, R_cur so fließt kein elektrischer Strom.

Um eine mögliche Kernsättigung des Transformators in dem Gleichspannungswandler-Modul 50 zu vermeiden, kann zunächst der Gradient der Soll-Regelgröße R3 mittels einer Rampenfunktion f() zwischen einem positiven Gradienten d_up und einem negativen Gradienten d_down begrenzt werden.

Darüber hinaus kann der Stromgradient beispielsweise auf maximal 10 % begrenzt werden:

$$-0,1 < R4 - R\_cur < +0,1.$$

Addiert man zu dieser Gleichung 1,0 hinzu und setzt die Formel für den aktuellen Arbeitspunkt ein, so ergibt sich hiermit als allgemeine Bedingung zwischen einem unteren Gradienten d_min und einem oberen Gradienten d_max:

$$d\_min < R4 + (U\_in \times N/(2 \times U\_out)) < d\_max.$$

Für diesen Fall kann der Gradient für die Regelgröße der Gleichspannungswandler-Module 50 mittels der Rampenfunktion f() noch weiter auf einen maximalen Gradienten d_slow begrenzt werden.

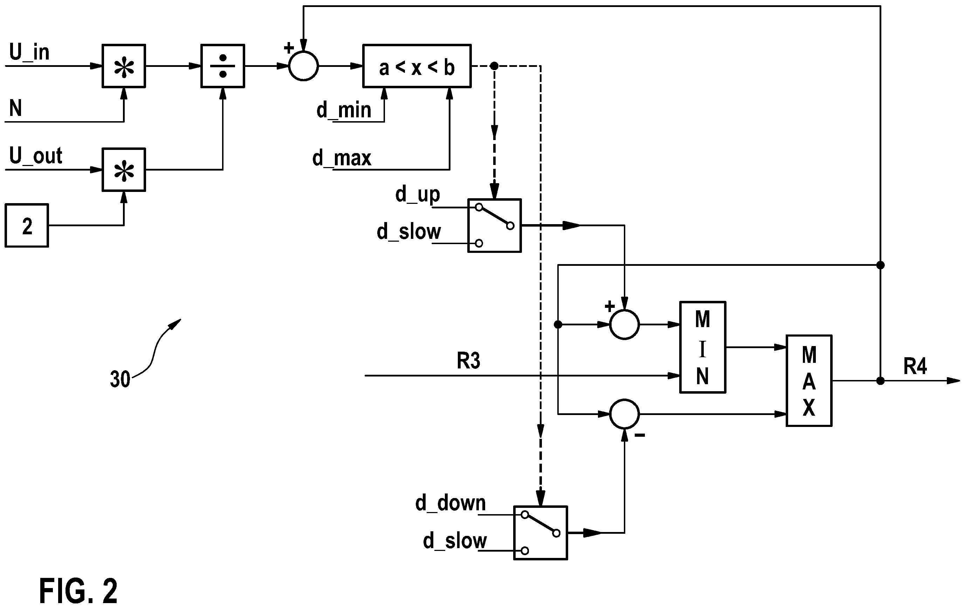

Figur 2 zeigt eine schematische Darstellung eines Blockschaltbilds einer dritten Regeleinrichtung 30 zur Begrenzung des Gradienten für die Regelgröße der Gleichspannungswandler-Module 50, wie sie zuvor beschrieben wurde.

Wie in Figur 2 zu erkennen ist, kann die Soll-Regelgröße R3, beispielsweise die Kombination der ersten Regelgröße R1 und der zweiten Regelgröße R2 limitiert werden, um den Gradienten der Regelgröße R4 zur Ansteuerung der Gleichspannungswandler-Module 50 zu limitieren. Hierzu kann aus der Eingangs-Gleichspannung U_in, dem Übersetzungsverhältnis des Transformators in dem Gleichspannungswandler-Modul 50 sowie der AusgangsGleichspannung U_out der aktuelle Arbeitspunkt ermittelt werden. Dieser kann daraufhin entsprechend der Grenzen d_min, d_max, sowie der Vorgaben für die maximalen Gradienten d_up, d_down und d_slow limitiert werden. Die in ihren Gradienten begrenzte Regelgröße R4 kann daraufhin zur Ansteuerung der Gleichspannungswandler-Module 50 ausgegeben werden.

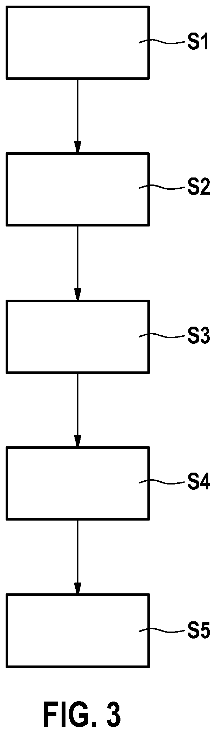

Figur 3 zeigt eine schematische Darstellung eines Ablaufdiagramms, wie es einem Verfahren zum Betrieb eines Gleichspannungswandlers 1 gemäß einer Ausführungsform zugrunde liegt.

In Schritt S1 wird eine erste Regelgröße unter Verwendung eines Werts einer aktuellen Eingangsspannung U_in, eines Werts des aktuellen Eingangsstroms I_in und einem Soll-Wert für die Ausgangsspannung U_des bestimmt.

In Schritt S2 wird eine zweite Regelgröße R2 unter Verwendung des Soll-Werts für die Ausgangsspannung U_des und einem Wert für die aktuelle Ausgangsspannung U_out bestimmt.

In Schritt S3 wird die erste Regelgröße R1 und die zweite Regelgröße R2 zu einer Soll-Regelgröße R3 kombiniert.

In Schritt S4 wird der Gradient der Soll-Regelgröße R4 auf einen vorbestimmten Maximalwert und/oder einen vorbestimmten Minimalwert begrenzt und die so begrenzte Soll-Regelgröße R3 als Ausgabe-Regelgröße R4 bereitgestellt.

Die in Gradienten begrenzte Ausgabe-Regelgröße R4 kann daraufhin verwendet werden, um in Schritt S5 einen oder mehrere Gleichspannungswandler-Module 50 anzusteuern.

Zusammenfassend betrifft die vorliegende Erfindung eine Ansteuerung eines Gleichspannungswandlers, wobei der Gradient einer Regelgröße für die Ansteuerung des Gleichspannungswandlers begrenzt wird. Durch die Limitierung des Gradienten der Regelgröße kann eine maximale Stromänderung in dem Gleichspannungswandler begrenzt werden, um gegebenenfalls gefährliche Betriebszustände des Gleichspannungswandlers zu vermeiden.

**Patentansprüche**

1. Gleichspannungswandler (1), mit:

   einer ersten Regeleinrichtung (10), die dazu ausgelegt ist, eine erste Regelgröße (R1) unter Verwendung eines Werts einer aktuellen Eingangsspannung (U_in), eines Werts eines aktuellen Eingangsstroms (I_in) und einem Sollwert für eine Ausgangsspannung (U_des) zu bestimmen;
   einer zweiten Regeleinrichtung (20), die dazu ausgelegt ist, eine zweite Regelgröße (R2) unter Verwendung des Sollwerts für die Ausgangsspannung (U_des) und dem Wert für die aktuelle Ausgangsspannung (U_out) zu bestimmen;
   einem Kombinationsglied (40), das dazu ausgelegt ist, die erste Regelgröße (R1) und die zweite Regelgröße (R2) zu kombinieren und als Soll-Regelgröße (R3) auszugeben;
   ; und
   mindestens ein Gleichspannungswandler-Modul (50), das dazu ausgelegt ist, unter Verwendung einer Ausgabe-Regelgröße (R4) eine Eingangsgleichspannung (U_in) in eine Ausgangsgleichspannung (U_out) zu konvertieren,
   **dadurch gekennzeichnet, dass**
   der Gleichspannungswandler (1) eine dritte Regeleinrichtung (30) umfasst, die dazu ausgelegt ist, einen Gradienten der Soll-Regelgröße (R3) auf einen vorbestimmen Minimalwert und/oder einen vorbestimmten Maximalwert zu begrenzen und die begrenzte Soll-Regelgröße (R3) als Ausgabe-Regelgröße (R4) bereitzustellen.

2. Gleichspannungswandler (1) nach Anspruch 1, wobei die dritte Regeleinrichtung (30) dazu ausgelegt ist, den Gradienten der Soll-Regelgröße (R3) unter Verwendung des Werts für die aktuelle Eingangsspannung (U_in) und dem Wert für die aktuelle Ausgangsspannung (U_out) zu begrenzen.

3. Gleichspannungswandler (1) nach Anspruch 1 oder 2, wobei das mindestens eine Gleichspannungswandler-Modul (50) jeweils einen Transformator umfasst, und der Transformator zwischen einem Eingangsanschluss und einem Ausgangsanaschluss angeordnet ist, und
wobei die dritte Regeleinrichtung (30) dazu ausgelegt ist, den Gradienten der Soll-Regelgröße (R3) unter Verwendung eines Übersetzungsverhältnisses (N) des Transformators zu begrenzen.

4. Gleichspannungswandler (1) nach einem der Ansprüche 1 bis 3, wobei die dritte Regeleinrichtung (30) dazu ausgelegt ist, eine maximale Stromänderung in dem Gleichspannungswandler (1) zu begrenzen.

5. Gleichspannungswandler (1) nach einem der Ansprüche 1 bis 4, wobei das mindestens eine Gleichspannungswandler-Modul (50) in einem HochsetzstellerBetrieb betrieben wird.

6. Verfahren zum Betrieb eines Gleichspannungswandlers (1), mit den Schritten:

Bestimmen (S1) einer ersten Regelgröße (R2) unter Verwendung eines Werts einer aktuellen Eingangsspannung (U_in), eines Werts eines aktuellen Eingangsstroms (I_in) und einem Sollwert für eine Ausgangsspannung (U_out);
Bestimmen (S2) einer zweiten Regelgröße (R2) unter Verwendung des Sollwerts für die Ausgangsspannung (U_des) und dem Wert für die aktuelle Ausgangsspannung (U_out);
Kombinieren (S3) der ersten Regelgröße (R1) und der zweiten Regelgröße (R2) zu einer Soll-Regelgröße (R3); und
Ansteuern (S5) einer Anzahl von mindestens einem Gleichspannungswandler-Modul (50) unter Verwendung einer Ausgabe-Regelgröße (R4).
**dadurch gekennzeichnet, dass** das Verfahren den Schritt umfasst:
Begrenzen (S4) eines Gradienten der Soll-Regelgröße (R3) auf einen vorbestimmen Minimalwert und/oder einen vorbestimmten Maximalwert und Bereitstellen der begrenzten Soll-Regelgröße (R3) als Ausgabe-Regelgröße (R4).

**Claims**

1. DC-DC converter (1), comprising:

a first control device (10), which is designed to determine a first controlled variable (R1) using a value for a present input voltage (U_in), a value for a present input current (I_in) and a setpoint value for an output voltage (U_des);
a second control device (20), which is designed to determine a second controlled variable (R2) using the setpoint value for the output voltage (U_des) and the value for the present output voltage (U_out);
a combination element (40), which is designed to combine the first controlled variable (R1) and the second controlled variable (R2) and to output said variables as setpoint controlled variable (R3); and
at least one DC-DC converter module (50), which is designed to convert a DC input voltage (U_in) into a DC output voltage (U_out) using an output controlled variable (R4),
**characterized in that**
the DC-DC converter (1) comprises a third control device (30), which is designed to limit a gradient of the setpoint controlled variable (R3) to a predetermined minimum value and/or a predetermined maximum value and to provide the limited setpoint controlled variable (R3) as output controlled variable (R4).

2. DC-DC converter (1) according to Claim 1, wherein the third control device (30) is designed to limit the gradient of the setpoint controlled variable (R3) using the value for the present input voltage (U_in) and the value for the present output voltage (U_out).

**3.** DC-DC converter (1) according to Claim 1 or 2, wherein the at least one DC-DC converter module (50) comprises in each case one transformer, and the transformer is arranged between an input terminal and an output terminal, and wherein the third control device (30) is designed to limit the gradient of the setpoint controlled variable (R3) using a transformation ratio (N) of the transformer.

**4.** DC-DC converter (1) according to one of Claims 1 to 3, wherein the third control device (30) is designed to limit a maximum current change in the DC-DC converter (1) .

**5.** DC-DC converter (1) according to one of Claims 1 to 4, wherein the at least one DC-DC converter module (50) is operated in a boost converter operating mode.

**6.** Method for operating a DC-DC converter (1), comprising the following steps:

determining (S1) a first controlled variable (R1) using a value for a present input voltage (U_in), a value for a present input current (I_in) and a setpoint value for an output voltage (U_des);
determining (S2) a second controlled variable (R2) using the setpoint value for the output voltage (U_des) and the value for the present output voltage (U_out);
combining (S3) the first controlled variable (R1) and the second controlled variable (R2) to give a setpoint controlled variable (R3);
and
driving (S5) a number at least one DC-DC converter module (50) using an output controlled variable (R4), **characterized in that** the method comprises the following step:
limiting (S4) a gradient of the setpoint controlled variable (R3) to a predetermined minimum value and/or a predetermined maximum value and providing the limited setpoint controlled variable (R3) as output controlled variable (R4).

**Revendications**

**1.** Convertisseur continu-continu (1), comprenant :

un premier dispositif de régulation (10) qui est conçu pour déterminer une première grandeur de régulation (R1) en utilisant une valeur d'une tension d'entrée actuelle (U_in), une valeur d'un courant d'entrée actuel (I_in) et une valeur de consigne pour une tension de sortie (U_des) ;
un deuxième dispositif de régulation (20) qui est conçu pour déterminer une deuxième grandeur de régulation (R2) en utilisant la valeur de consigne pour la tension de sortie (U_des) et la valeur pour la tension de sortie actuelle (U_out) ;
un combinateur (40) qui est conçu pour combiner la première grandeur de régulation (R1) et la deuxième grandeur de régulation (R2) et pour les sortir comme une grandeur de régulation de consigne (R3) ; et
au moins un module de convertisseur continu-continu (50) qui est conçu pour convertir une tension continue d'entrée (U_in) en une tension continue de sortie (U_out) en utilisant une grandeur de régulation de sortie (R4), **caractérisé en ce que** le convertisseur continu-continu (1) comprend un troisième dispositif de régulation (30) qui est conçu pour limiter un gradient de la grandeur de régulation de consigne (R3) à une valeur minimale prédéterminée et/ou à une valeur maximale prédéterminée et pour fournir la grandeur de régulation de consigne limitée (R3) comme une grandeur de régulation de sortie (R4).

**2.** Convertisseur continu-continu (1) selon la revendication 1, dans lequel le troisième dispositif de régulation (30) est conçu pour limiter le gradient de la grandeur de régulation de consigne (R3) en utilisant la valeur pour la tension d'entrée actuelle (U_in) et la valeur pour la tension de sortie actuelle (U_out).

**3.** Convertisseur continu-continu (1) selon la revendication 1 ou 2, dans lequel ledit au moins un module de convertisseur continu-continu (50) comprend respectivement un transformateur, et le transformateur est disposé entre une borne d'entrée et une borne de sortie, et dans lequel le troisième dispositif de régulation (30) est conçu pour limiter le gradient de la grandeur de régulation de consigne (R3) en utilisant un rapport de conversion (N) du transformateur.

**4.** Convertisseur continu-continu (1) selon l'une quelconque des revendications 1 à 3, dans lequel le troisième dispositif de régulation (30) est conçu pour limiter une modification de courant maximale dans le convertisseur continu-continu (1).

**5.** Convertisseur continu-continu (1) selon l'une quelconque des revendications 1 à 4, dans lequel ledit au moins un module de convertisseur continu-continu (50) fonctionne dans un mode de convertisseur élévateur.

**6.** Procédé permettant de faire fonctionner un convertisseur continu-continu (1), comprenant les étapes consistant à :

déterminer (S1) une première grandeur de régulation (R1) en utilisant une valeur d'une tension d'entrée actuelle (U_in), une valeur d'un courant d'entrée actuel (I_in) et une valeur de consigne pour une tension de sortie (U_des) ;
déterminer (S2) une deuxième grandeur de régulation (R2) en utilisant la valeur de consigne pour la tension de sortie (U_des) et la valeur pour la tension de sortie actuelle (U_out) ;
combiner (S3) la première grandeur de régulation (R1) et la deuxième grandeur de régulation (R2) en une grandeur de régulation de consigne (R3) ;
piloter (S5) un nombre d'au moins un module de convertisseur continu-continu (50) en utilisant une grandeur de régulation de sortie (R4),
**caractérisé en ce que** le procédé comprend l'étape consistant à :
limiter (S4) un gradient de la grandeur de régulation de consigne (R3) à une valeur minimale prédéterminée et/ou à une valeur maximale prédéterminée, et fournir la grandeur de régulation de consigne limitée (R3) comme une grandeur de régulation de sortie (R4).

FIG. 1

EP 4 022 760 B1

FIG. 2

FIG. 3

**EP 4 022 760 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102016219740 A1
- WO 2017162408 A1